# FASCICULE DE BREVET EUROPEEN

(11) **EP 0 890 505 B1**
(45) Date de publication et mention de la délivrance du brevet: **10.11.2004**
(21) Numéro de dépôt: 97450018.3
(22) Date de dépôt: 11.07.1997
(51) Int. Cl.: B62K 25/02, B60B 27/02

(54) **Dispositif de montage d'un moyeu de roue d'un deux-roues**
Zweirad-Radnaben-Montagevorrichtung
Wheel hub mounting assembly for a two wheeler

(43) Date de publication de la demande: 13.01.1999
(73) Titulaire: SHIMANO INC., Osaka 590 (JP)
(72) Inventeur: Savard, Franck, 22400 Planguenoual (FR)
(74) Mandataire: Wallinger, Michael, Dr.-Ing.

(56) Documents cités:
- EP-A- 0 094 649
- WO-A-97/02149
- FR-A- 2 518 461

## Description

La présente invention concerne un dispositif de montage de la roue, notamment arrière d'un deux-roues en sorte de permettre le démontage en laissant la chaîne en place sur son pignon d'arbre.

Le terme deux-roues est utilisé à bon escient car la présente invention est décrite en application à un vélo par souci de simplification mais se trouve applicable par transposition directe à une moto, au nombre de pignons près puisque la moto ne comporte qu'une seule couronne à l'arrière au lieu d'une cassette de pignons.

On sait en effet que le démontage de la roue arrière d'un vélo pose des problèmes car les pignons sont solidaires du moyeu de la roue.

En effet, la roue arrière d'un vélo comprend un moyeu sur les bords duquel sont fixés les rayons qui supportent la jante. Ce moyeu comprend de façon connue un arbre intérieur avec des roulements interposés, les deux extrémités de cet arbre venant se fixer sur les extrémités du cadre du vélo, dans des logements prévus à cet effet.

L'arbre est maintenu en place généralement par des moyens de fixation rapide, à excentrique.

Le dérailleur est également fixé sur le cadre, au niveau de cet arbre, en sorte de rester sur le cadre lorsque la roue est démontée.

La chaîne est disposée entre un plateau ou un jeu de plateaux et une cassette de pignons, cette cassette étant solidaire en rotation du moyeu avec des moyens de mise en roue libre de cette cassette de pignons par rapport audit moyeu.

Lorsque la roue doit être démontée pour quelque raison que ce soit, crevaison, rangement dans un coffre de voiture ou entretien, l'utilisateur est amené à desserrer les moyens de fixation rapide de l'arbre de roue puis à dégager la roue du cadre tout en soulevant la chaîne en sorte de dégager la cassette de pignons.

La manoeuvre est plutôt insatisfaisante pour plusieurs raisons.

Tout d'abord, si le changement doit être rapide, on note que le dégagement des pignons fait perdre un temps précieux. De plus, le temps perdu est encore plus important pour la remise en place d'une roue de secours.

Cette perte de temps est tellement sensible que dans les courses, les coureurs ont pour consigne de ramener la chaîne sur le petit pignon dès la crevaison par exemple, en sorte que les mécaniciens puissent acquérir des gestes systématiques et que la manoeuvre soit facilitée par la position de la chaîne sur le plus petit pignon donc celui qui est extérieur. On comprend immédiatement le problème, le coureur est obligé de redémarrer sur un grand développement, ce qui explique les poussées du coureur par le mécanicien nécessaires pour une relance.

Dans le cas d'un démontage pour un rangement dans un coffre ou pour un entretien, la vitesse n'est plus déterminante mais on note alors que dès que la roue est retirée, la chaîne est détendue et pend entre les plateaux et le dérailleur, ce qui occasionne des désagréments, salissures du coffre ou chaîne traînant dans la terre entre autres. La chaîne peut aussi se vriller ou s'emmêler.

On remarque aussi que tout changement de roue entraîne le retrait de la cassette de pignons si bien que toutes les roues doivent être équipées d'un jeu de pignons. Outre l'aspect financier, il faut savoir que tous les coureurs n'utilisent pas les mêmes pignons si bien qu'il faut des roues différentes équipées de cassettes de pignons propres à chaque coureur, multipliant le nombre de roues à gérer.

On sait aussi que les réglages des dérailleurs sont de plus en plus délicats et le démontage de roues peut perturber ces réglages.

On sait aussi que dans le cas de certains agencements, notamment dans le cas des dérailleurs de type à chape inversée, le démontage est encore plus délicat.

La demande de brevet européen EP 0 896 887 A1 montre un assemblage d'un moyeu conventionnel incluant un corps de cassette pour le montage de pignons d'entraînement, le corps de cassette étant fixé de manière dégageable au moyeu cylindrique. Un premier tube est monté libre en rotation autour de l'axe à l'intérieur du moyeu. Un second tube est monté en rotation dans le premier tube et aussi à l'intérieur du corps de cassette. La référence ne montre pas un tube de liaison prévu pour coulisser dans les premier et second tubes.

La demande de brevet international WO 97/02149 montre un dispositif d'entraînement d'une roue libre pour un vélo incluant un premier tube monté en rotation à l'intérieur du moyeu cylindrique. Un second tube est fourni qui est en rotation à l'intérieur du corps de cassette pour les pignons d'entraînement. Ces deux tube sont interreliés dans les conditions assemblées aux moyens d'une tige étendue à travers les tubes. Le corps de cassette et le moyeu cylindrique sont liés l'un à l'autre de manière dégageable.

La présente invention propose un dispositif de montage d'un moyeu de roue arrière qui permet le démontage de la roue tout en laissant en place la cassette de pignons, qui conserve la résistance des agencements de l'art antérieur, qui évite l'augmentation du nombre de pièces, qui est directement adaptable aux roues arrières des deux-roues existants, qui est d'une fiabilité certaine et qui évite tout retrait intempestif de la roue même en cas de remontage incomplet du dispositif.

Selon la présente invention, un dispositif de montage d'un moyeu de roue est équipé tel que défini en revendication 1. Les modes de réalisation du dispositif de montage sont définis en revendications 2 à 9. Le présent dispositif de montage inclut un premier tube monté libre en rotation à l'intérieur du moyeu et est muni de moyens de fixation sur le cadre. Un second tube est monté libre en rotation à l'intérieur du corps de cassette et est muni de moyens de fixation sur le cadre et des moyens de liaison sont fournis pour interrelier ces deux tubes. Des moyens de manoeuvre de ces moyens de liaison incluent des moyens de blocage des moyens de manoeuvre. De plus, des moyens de liaison amovibles sont fournis pour interrelier le corps de cassette et le moyeu cylindrique.

Les moyens de liaison incluent un tube de liaison prévu pour coulisser dans le premier et le second tubes entre au moins une première position dans laquelle le tube de liaison est rétracté dans le premier tube et une seconde position dans laquelle le tube de liaison est en saillie hors du premier tube et pénètre dans le second tube lorsque les premier et second tubes sont alignés.

Selon un premier mode de réalisation, le tube de liaison comprend une lumière fermée prévue pour recevoir une goupille solidaire des moyens de manoeuvre.

Selon un premier mode de réalisation, le tube de liaison comprend au moins une lumière rectiligne débouchante avec un décrochement, prévue pour coopérer avec au moins une broche solidaire du second tube.

Plus particulièrement, les moyens de manoeuvre comprennent un axe de manoeuvre central, solidaire des moyens de blocage et mobile en translation et en rotation par rapport au premier tube.

Les moyens amovibles de liaison en rotation du corps de cassette et du corps cylindrique de moyeu comprennent un Vé de guidage côté moyeu et un adaptateur côté cassette.

L'adaptateur est de forme triangulaire.

Ce dispositif comprend en outre des moyens de rappel élastique des moyens de liaison en position de liaison et des moyens de retenue à frottement doux cranté des moyens de manoeuvre par rapport au premier tube.

La présente invention est maintenant décrite en regard des dessins annexés sur lesquels les différentes figures représentent :
- figures 1A, 1B et 1C, une vue en coupe médiane d'un moyeu de roue équipé du dispositif selon l'invention avec les différentes étapes,
- figure 2, une vue en coupe de l'adaptateur menant et du Vé de guidage mené du dispositif,
- figure 3, une vue en perspective de l'adaptateur et du Vé de guidage du dispositif,
- figure 4, une vue d'un premier mode de réalisation sensiblement identique à celui de la figure 1 mais avec un montage vissé,
- figure 5A, une vue d'un second mode de réalisation perfectionné, plus particulièrement adapté aux vélos dits routiers,
- figure 5B, une vue en perspective du tube de liaison type broche, et
- figure 6, une vue d'un troisième mode de réalisation, plus particulièrement adapté aux vélos dits tout terrain.

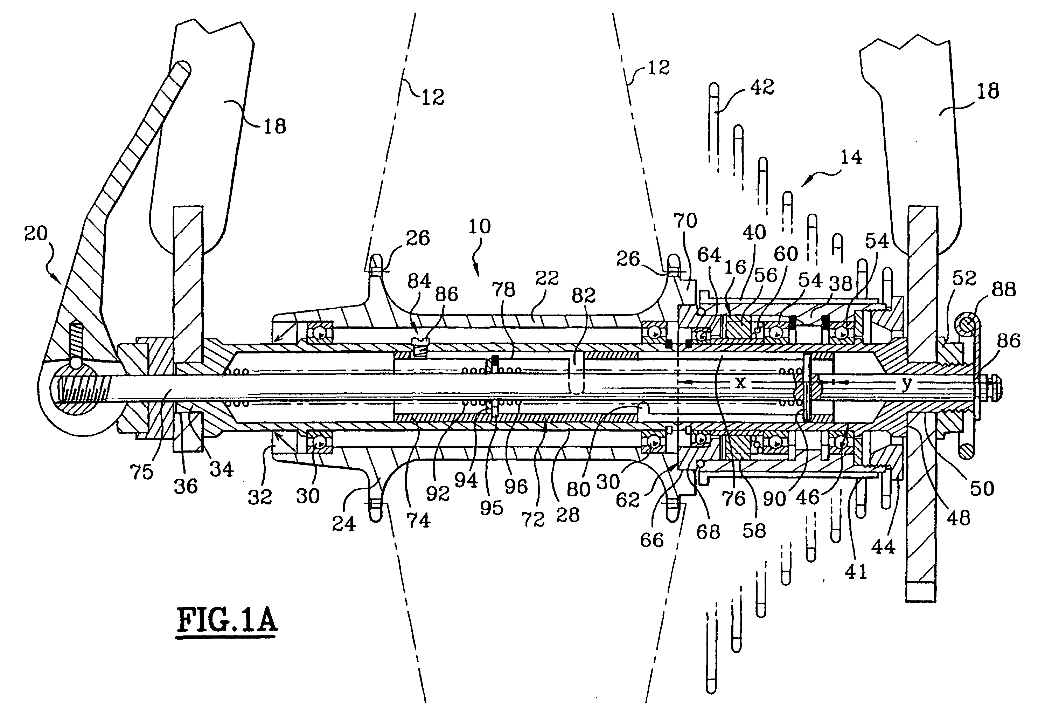

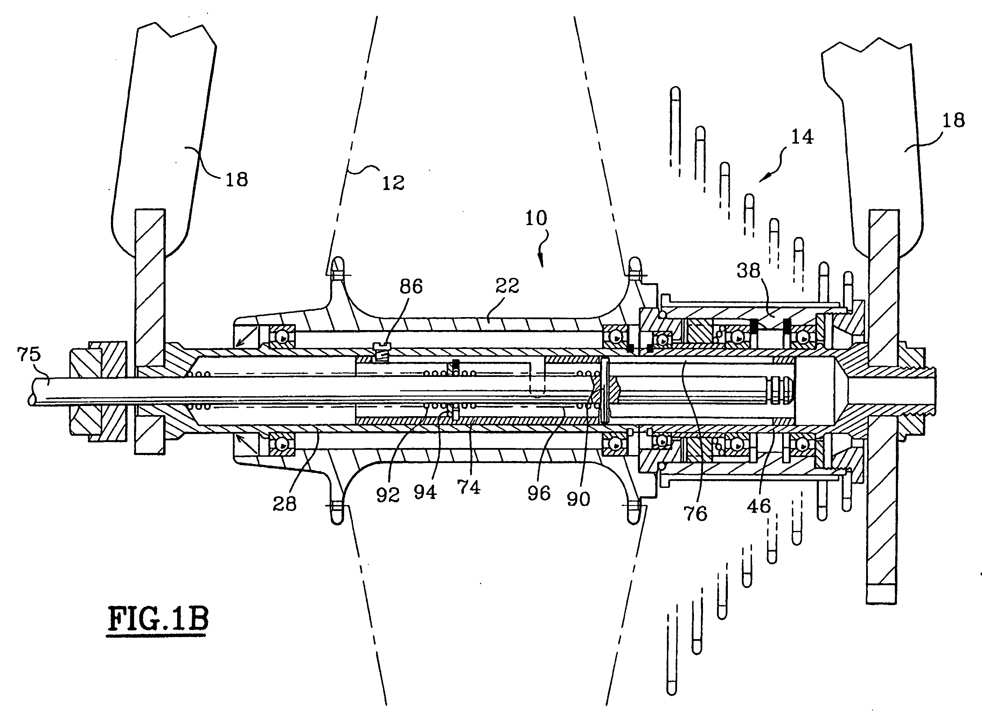

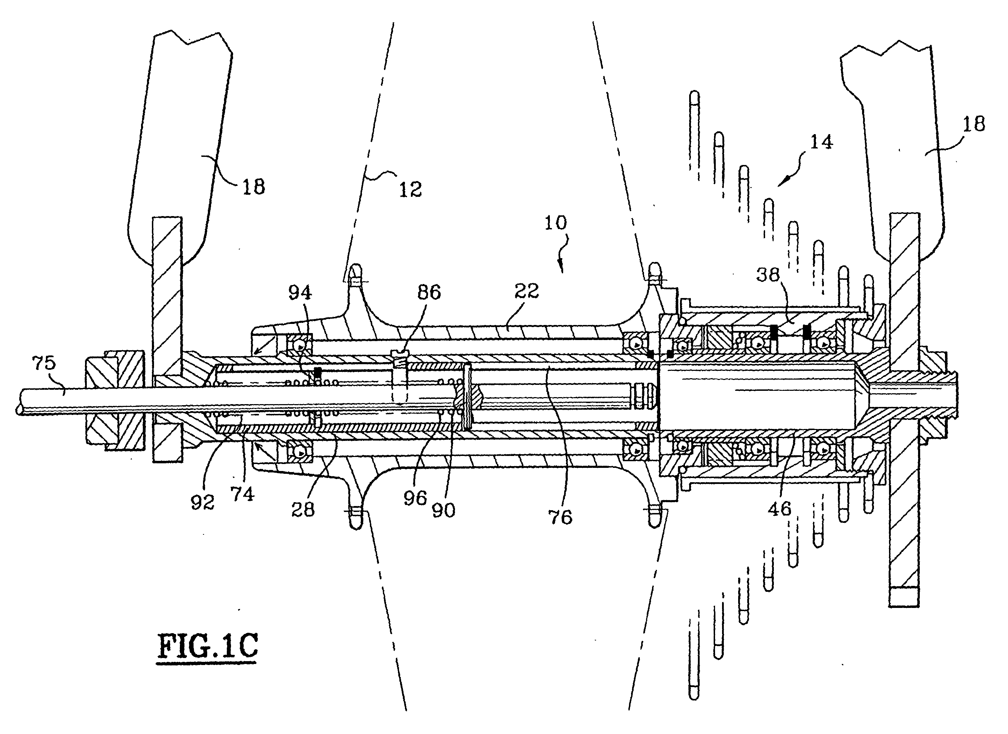

Sur la figure 1A, on a représenté un moyeu 10 avec des rayons 12 reliés à une jante, non représentée pour la clarté du dessin, une cassette 14 à pignons, une roue libre 16, un cadre 18 de vélo et des moyens 20 de fixation rapide.

Le moyeu comprend une partie 22 cylindrique de révolution avec des ailes 24 latérales munies de trous 26 prévus pour recevoir les extrémités des rayons.

Ce moyeu comprend en outre un tube 28, intérieur gauche, en tenant compte du sens de déplacement. Une paire de roulements 30 assure la libre rotation de la partie 22 cylindrique de révolution par rapport à ce tube 28, intérieur gauche. Un joint 32 assure l'étanchéité côté gauche.

Ce tube 28, intérieur gauche dépasse à l'extérieur de la partie cylindrique du moyeu pour coopérer par un épaulement 34 avec le cadre 18, généralement dans une fente 36.

La cassette 14 à pignons comprend un corps 38 de cassette avec des cannelures 40 dans lesquelles viennent se glisser des dents 41 internes des pignons 42 pour former un empilement, l'espacement et l'épaisseur de chacun des pignons sont bien connus et adaptés pour former des empilements donnés dont les caractéristiques sont bien connues.

Un écrou 44 assure le blocage de l'empilement sur le corps 38 de cassette.

Ce corps 38 de cassette est monté coaxialement sur un tube 46, intérieur droit. Ce tube 46, intérieur droit, comporte un épaulement 48 prévu pour coopérer avec une fente 50, ménagée dans le cadre 18, côté droit.

Un écrou 52 assure le blocage du tube 46, intérieur droit sur le cadre.

Une paire de roulements 54 avec les circlips de blocage correspondants assurent la libre rotation du corps 38 de cassette par rapport au tube 46, intérieur droit.

La roue libre 16 comprend par exemple de façon connue une couronne 56 interne avec des crans inclinés, solidaire en rotation du corps 38 de cassette et libre en translation grâce à des cannelures 58. Un ressort 60 de rappel tend à pousser cette couronne 56 contre une bague 62 dont la face en vis à vis comporte aussi des crans prévus pour coopérer avec ceux de la couronne, dans le sens d'entraînement. Lorsque le corps 38 de pignons est retenu par la chaîne, les crans inclinés de la couronne 56 échappent sur les crans de la bague 62, assurant un débrayage.

La bague 62 est également montée libre en rotation par rapport au tube 46, intérieur droit, grâce à un roulement 64.

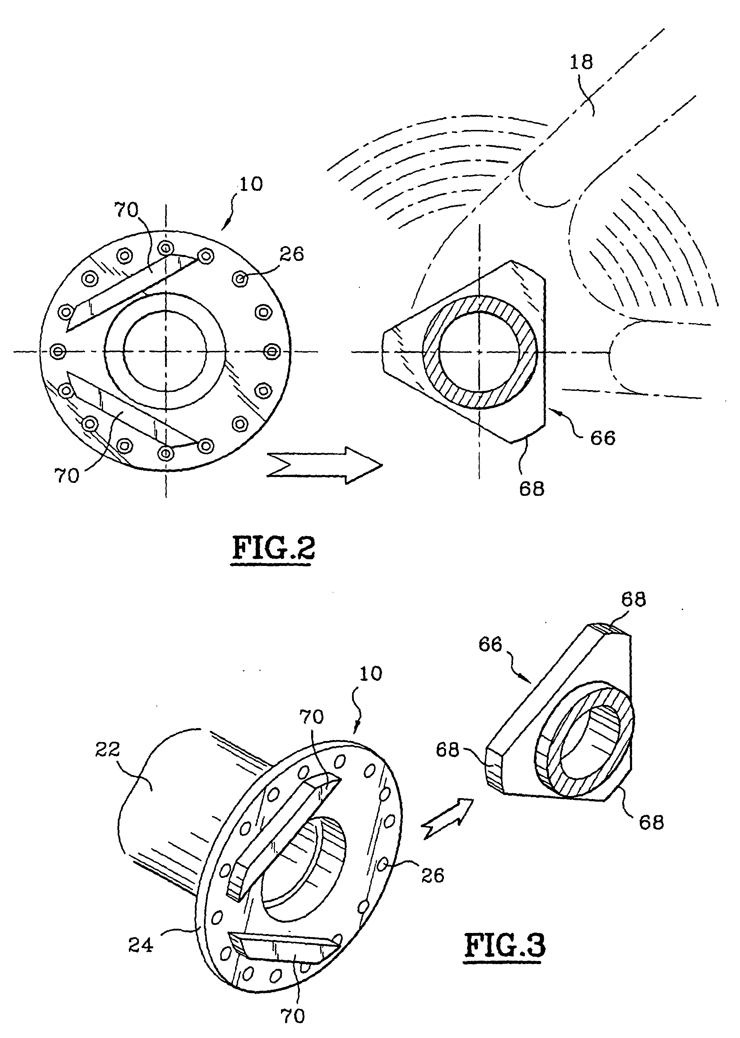

La bague 62 comprend en outre sur sa périphérie extérieure un adaptateur 66, menant, venu d'usinage avec ladite bague. Cet adaptateur est mieux représenté et plus visible sur les figures 2 et 3.

Cet adaptateur 66 a un profil triangulaire à sommets 68 tronqués, inscrits préférentiellement dans un cercle.

Les dimensions de ce triangle sont prévues pour venir coopérer avec un Vé 70 de réception porté par le corps 22 cylindrique du moyeu.

Les deux tubes intérieur gauche 28 et droit 46 ont une longueur adaptée pour qu'ils viennent en aboutement lorsque le dispositif est monté ainsi que montré sur la figure 1A.

L'ensemble du dispositif qui vient d'être décrit est complété par des moyens 72 de liaison des deux tubes.

Ces moyens 72 de liaison comprennent un tube 74 de liaison qui vient se loger à coulissement doux, de façon coaxiale, à l'intérieur des deux tubes 28 et 46 ainsi qu'un axe 75 de manoeuvre, central.

Le tube 74 de liaison comprend une première et une seconde lumières fermées 76 et 78 respectivement, munies chacune d'un décrochement de blocage 80 et 82.

La longueur de la première lumière est de y tandis que la longueur de la seconde lumière est de x.

La seconde lumière 78 reçoit un pion 84 de guidage, en l'occurrence une vis 86, solidaire du tube 28, intérieur gauche dans lequel le tube 74 de liaison est susceptible de coulisser.

L'axe 75 de manoeuvre a une longueur telle qu'il fait saillie de part et d'autre du cadre 18, à l'extérieur.

Cet axe de manoeuvre est équipé côté gauche des moyens 20 de serrage rapide de type connu, à levier et excentrique et côté droit d'une gorge 86 prévue pour recevoir un clip 88.

Cet axe 75 de manoeuvre comprend en outre une goupille 90 transversale disposée à une distance de l'extrémité.

La longueur de cet axe de manoeuvre est telle que, une fois le dispositif selon l'invention en place, son extrémité droite se trouve à une distance y de l'extrémité du tube 74 de liaison.

De plus, la longueur du tube 74 de liaison est telle que la longueur de recouvrement avec le tube droit est de x. La longueur de ce tube de liaison est définie à gauche en sorte qu'il reste une distance x libre entre ce tube de liaison et l'extrémité du tube gauche.

Les montage et démontage du dispositif qui vient d'être décrit sont maintenant indiqués en regard des différentes figures 1A, 1B, 1C, 2 et 3.

Le corps 38 de la cassette de pignons 42 est fixé sur le cadre 18 au moyen de l'écrou 52.

La bague 62 de la roue libre 16 est libre en rotation ainsi que l'adaptateur 66 qu'elle porte, grâce au roulement 64, ce qui lui permet d'être orientée dans n'importe quelle position angulaire.

L'utilisateur tient en main la roue arrière équipé du moyeu 10. Les moyens de fixation rapide 20 sont ouverts et l'axe 75 est retiré sur la gauche par rapport au corps 22 cylindrique de moyeu et donc par rapport au tube 28, intérieur gauche. Le tube 74 de liaison est en superposition parfaite avec le tube 28, intérieur gauche, sans faire saillie au delà de l'extrémité droite du corps 22 cylindrique de moyeu. Seul est en saillie, par construction, le Vé 70 de guidage.

L'utilisateur approche la roue arrière et emboîte le Vé 70 de guidage sur l'adaptateur 66 en faisant correspondre ce Vé avec l'un des sommets 68 de cet adaptateur. Cette manoeuvre est facilitée par le fait que les sommets sont tronqués si bien que l'adaptateur s'auto-oriente dès l'introduction de la roue.

Dès que la roue est emboîtée à fond de Vé, l'utilisateur translate l'axe 75 par manoeuvre des moyens de fixation rapide. Pour cela, il fait d'abord tourner légèrement l'axe en sorte de dégager le décrochement 82 de la lumière 78 du tube de liaison 74 hors du pion 84. En effet, le tube 28, intérieur gauche est immobilisé en rotation dans la fente 36, de façon aisée par réalisation d'un méplat. Il lui suffit ensuite de pousser légèrement, si besoin est puisqu'il est prévu un premier ressort 92, interposé entre l'extrémité gauche du tube 28, intérieur gauche et une rondelle 94, bloquée par un circlips 95.

Le tube de liaison 74 se déplace et pénètre d'une longueur x dans le tube 46, intérieur droit.

L'utilisateur, dans le même mouvement tourne encore légèrement les moyens de fixation 20 pour dégager la goupille 90 solidaire de l'axe 75 du décrochement 80 de la lumière 76. Un second ressort 96, de plus faible raideur que le premier, interposé entre la rondelle 94 et la goupille 90 assure ce déplacement en complément de la poussée de l'utilisateur pour faire subir à l'axe 75 une translation y, si bien que l'extrémité de cet axe fait saillie au-delà de l'extrémité du tube 46, intérieur droit, il suffit alors de clipser ou brocher cet axe pour assurer le blocage en translation de l'axe 75. Le serrage de l'excentrique des moyens 20 de fixation rapide assure l'immobilisation du dispositif selon l'invention.

Le montage de la roue est assuré.

Le démontage s'effectue en réalisant les différentes étapes dans l'ordre inverse de celui qui vient d'être décrit.

On note que dans tous les cas, dès que la première translation est effectuée et que le tube 74 de liaison pénètre dans le tube 46, intérieur droit, la liaison axiale est réalisée et le dispositif peut fonctionner, c'est à dire que l'utilisateur peut monter sur son vélo sans danger.

Par contre, la coopération entre le Vé 70 et l'adaptateur risque d'être de piètre qualité avec des désemboîtements répétés mais cela sans danger pour l'utilisateur, d'où la nécessité de verrouiller l'axe 75.

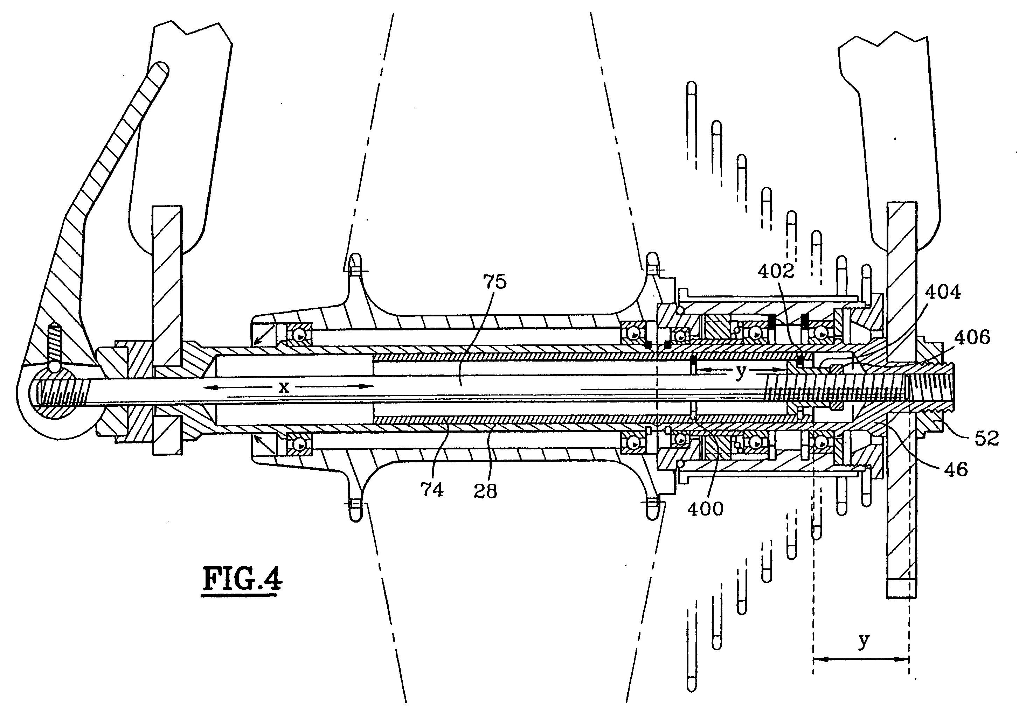

Sur la figure 4, on retrouve les éléments essentiels du mode de réalisation précédent qui porte les mêmes références, mais avec une simplification du montage.

En effet, le tube 28, intérieur gauche, est exempt de pion tout comme le tube de liaison qui est exempt de lumières. Le tube de liaison comprend un premier et un second circlips 400 et 402, disposés pour libérer une course y entre les deux. Un écrou 404 et un contre-écrou 406 sont vissés sur l'axe 75 dont l'extrémité est filetée a cet effet.

L'écrou 404 avec la tige peuvent coulisser librement entre les deux circlips, sur la course définie.

L'extrémité droite du tube 46, intérieur droit, est filetée pour recevoir par vissage l'extrémité de l'axe 75.

Dans cette variante, l'utilisateur maintient les moyens de manoeuvre écartés vers la gauche pour maintenir l'écrou 404 contre le premier circlip 400 et éviter ainsi la mise en saillie du tube de liaison 74 par rapport au tube 28, intérieur gauche lors de l'introduction. L'utilisateur translate alors en un seul mouvement l'axe 75 ce qui plaque l'écrou contre le second circlip 402, après un déplacement sur une longueur y, puis translate le tube de liaison sur une longueur x , en même temps que l'axe 75 est vissé dans l'extrémité du tube 46, intérieur droit.

Cette variante est particulièrement économique par le faible nombre de pièces qu'elle met en jeu. On peut aussi, pour la rendre encore plus économique, remplacer les moyens de fixation rapide 20 du type à levier et excentrique par de simples vis à papillon.

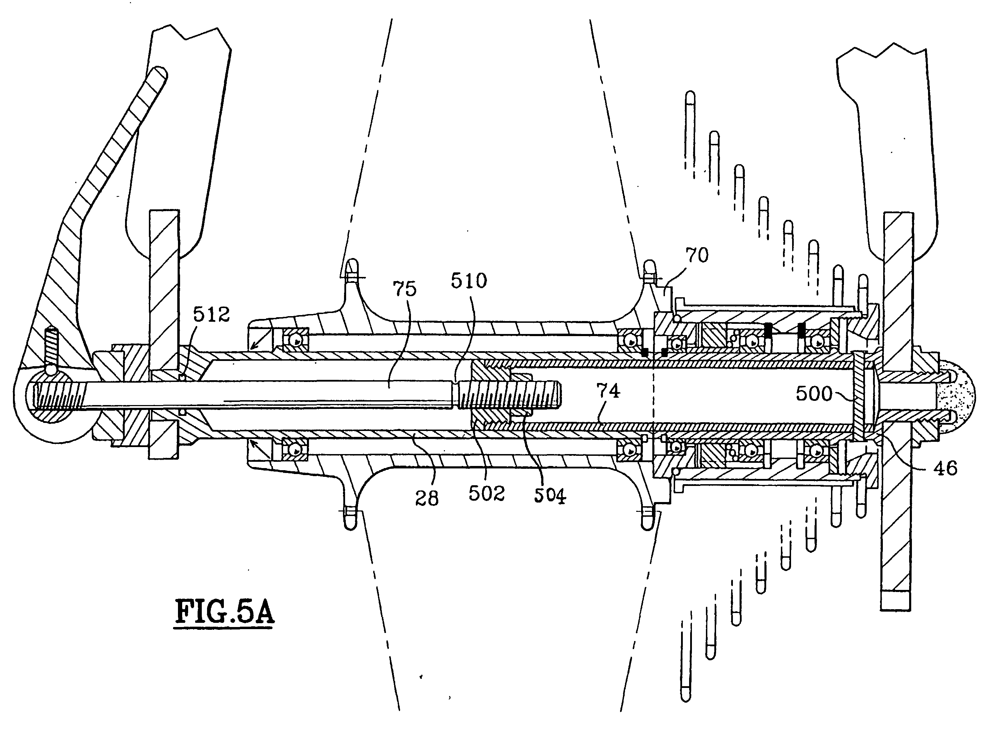

Sur la figure 5A, une variante dite à broche est représentée. Les éléments identiques portent les mêmes références.

Le tube 46, intérieur droit, comprend une broche 500, transversale, à proximité immédiate de l'extrémité droite de ce tube.

Le tube 74 de liaison est fixé par son extrémité gauche, à l'extrémité de l'axe 75 par un écrou 502 vissant sur ledit axe et à l'intérieur du tube de liaison. L'ensemble est ajusté puis immobilisé par un contre-écrou 504.

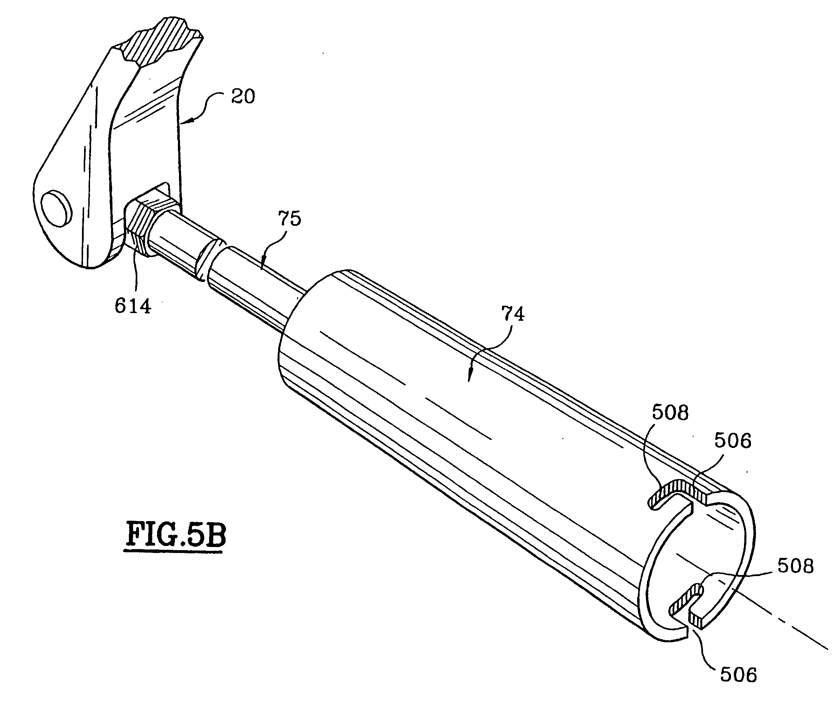

L'extrémité droite du tube 74 de liaison est découpée pour former une lumière 506 rectiligne, suivant une génératrice, avec un décrochement de blocage 508, voir figure 5B.

La lumière 506 rectiligne est prévue pour coopérer avec la broche 500.

En complément, l'axe 75 comprend, en amont de la fixation par écrou avec le tube 74 de liaison une gorge 510 prévue pour recevoir à frottement cranté un anneau 512 élastique, solidaire de l'extrémité du tube 28 intérieur gauche et en saillie sur la paroi intérieure.

Dans ce mode de réalisation, lors du remontage, l'axe 75 est maintenu en position translatée vers la gauche par l'anneau 512 élastique qui pénètre dans la gorge 510.

Lorsque l'utilisateur a emboîté la roue par coopération du Vé 70 de guidage avec l'adaptateur 66, il débloque l'axe 75 par simple pression et pousse ledit axe vers la droite jusqu'à ce que l'extrémité du tube 74 de liaison vienne en butée sur la broche 500. Par une légère rotation, si nécessaire, il dispose la lumière rectiligne en face de ladite broche pour que celle-ci pénètre dans cette lumière et par rotation, la broche 500 est bloquée dans le décrochement 508.

Il suffit ensuite de serrer les moyens 20 de fixation rapide pour assurer l'immobilisation du dispositif.

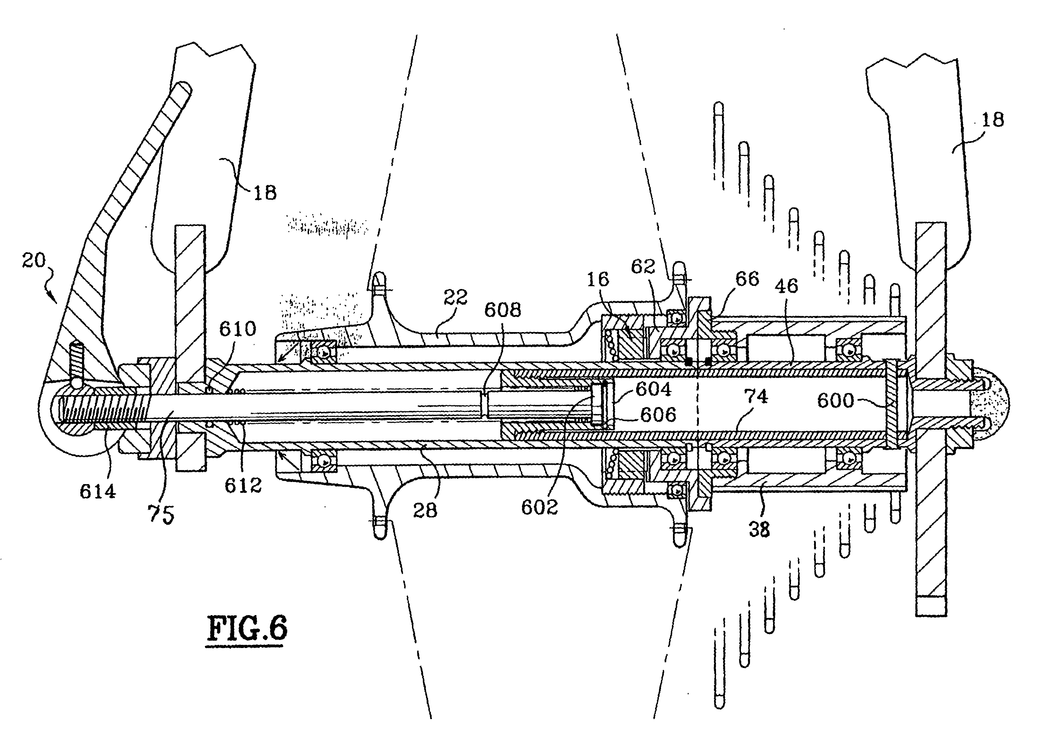

Sur la figure 6, on a représenté une variante plus particulièrement applicable au vélo tout terrain dit VTT.

On note que la roue libre est rapportée dans le corps 22 cylindrique de moyeu.

De plus, l'adaptateur 66 est une pièce rapportée vissée dans le corps 38 de cassette qui est simplifié du fait du retrait de la roue libre. Ce Vé a toujours le profil triangulaire à pointes 68 tronquées. Quant au Vé 70 de guidage, il est réalisé à partir de la bague 62 de la roue libre.

Dans cette variante, également à broche, la liaison de l'axe 75 avec le tube 74 de liaison est modifiée en ce sens que l'extrémité de l'axe 75 comprend une tête 602, par exemple de forme hexagonale, qui vient se placer dans un logement 604 dans lequel elle est maintenue bloquée par un circlip 606. Ainsi l'axe 75 dispose d'une certaine liberté angulaire par rapport au tube 74 de liaison, assurant ainsi un auto-alignement.

Un agencement identique avec une gorge 608 et un anneau 610 élastique permet un frottement cranté entre l'axe 75 et le tube 28, en position dégagée.

Le tube 74 de liaison est identique à celui représenté sur la figure 5B en sorte de faire coopérer la lumière 506 rectiligne et le décrochement 508 avec la broche 600.

On peut aussi prévoir un méplat sur le tube 46, à son extrémité droite pour permettre un positionnement angulaire précis de la broche 600, ce qui facilite la mise en place de l'axe 75 et des moyens 20 de fixation rapide toujours dans la même position.

Un ressort d'assistance 612, interposé entre l'extrémité du tube 28, intérieur gauche et la tête 602 solidaire de l'axe 75 permet de rappeler le tube de liaison qui en est solidaire vers la droite pour assurer la sécurité de liaison.

Dans cette variante, un contre-écrou 614, disposé dans les moyens 20 de fixation rapide, combiné avec un filetage de l'axe 75 permet le réglage de la longueur disponible de l'axe 75 et un ajustement précis du montage.

On note que dans tous les cas, l'ensemble de la roue et de la cassette peut être démonté ensemble lorsque l'écrou 52 est préalablement desserré. Dans le cas du premier mode de réalisation, dans la première position, si cet écrou est desserré, l'ensemble roue, moyeu et pignon peut être retiré à condition de maintenir la cassette pressée contre le moyeu car dès après le démontage plus rien ne retient les deux parties l'une contre l'autre.

Par contre, dans le cas par exemple de la variante de la figure 1A, si le clip 88 est laissé en place, le problème de liaison est résolu, surtout que le déverrouillage des moyens 20 de fixation rapide permet le desserrage aisé de l'écrou 52.

On note aussi que dans le cas de l'invention, le cadre qui comprend généralement une fente de mise en place de l'axe du moyeu peut être modifié pour ne comprendre qu'une patte avec un trou avec un méplat d'antirotation dans lequel est vissée la cassette de pignons, ce qui est un autre avantage. Ceci permet aussi un renforcement de cette partie du cadre qui porte aussi le dérailleur.

Il est aussi à remarquer que l'adaptateur 66 est représenté menant et le Vé 70 est mené mais un agencement inversé pourrait tout aussi bien être mis en oeuvre sans sortir du cadre du dispositif selon la présente invention.

## Revendications

1. Dispositif de montage d'un moyeu de roue, notamment arrière, de deux-roues sur un cadre (18), notamment d'un vélo, comprenant au moins un pignon (42) d'entraînement de la roue arrière monté sur un corps de cassette (38) ainsi qu'un moyeu (10) avec un corps cylindrique (22) muni d'ailes latérales (24) prévues pour recevoir des rayons (12), ledit dispositif de montage comprenant :
un premier tube (28) monté libre en rotation à l'intérieur du moyeu et muni de moyens de fixation sur le cadre,
un second tube (46) monté libre en rotation à l'intérieur du corps de cassette (38) et muni de moyens de fixation (52) sur le cadre,
des moyens de liaison (72) de ces deux tubes,
des moyens de manoeuvre (75) de ces moyens de liaison avec des moyens de blocage (20) de ces moyens de manoeuvre, et
des moyens amovibles (66,70) de liaison en rotation du corps de cassette et du corps cylindrique de moyeu,
**caractérisé en ce que** les moyens de liaison (72) comprennent un tube de liaison (74) prévu pour coulisser dans les premier et second tubes entre au moins une première position dans laquelle le tube de liaison (74) est rétracté à l'intérieur du premier tube (28) et une seconde position dans laquelle le tube de liaison (74) est en saillie hors du premier tube (28) et pénètre dans le second tube (46) lorsque les premier et second tubes sont alignés.

2. Dispositif selon la revendication 1, **caractérisé en ce qu'**il comprend un mécanisme de roue libre (16) interposé entre le premier tube (28) et le corps cylindrique (22) de moyeu ou entre le second tube (46) et le corps de cassette (38).

3. Dispositif de montage selon la revendication 1 ou 2, **caractérisé en ce que** le tube de liaison (74) comprend une lumière fermée (76), prévue pour recevoir une goupille (90) solidaire des moyens (75) de manoeuvre.

4. Dispositif de montage selon la revendication 1 ou 2, **caractérisé en ce que** le tube de liaison (74) comprend au moins une lumière rectiligne débouchante (506) avec un décrochement (508), ladite lumière étant prévue pour coopérer avec au moins une broche (500, 600) solidaire du second tube (46).

5. Dispositif de montage selon l'une quelconque des revendications précédentes, **caractérisé en ce que** les moyens de manoeuvre (75) comprennent un axe de manoeuvre (75), central, solidaire des moyens de blocage (20) et mobile en translation et en rotation par rapport au premier tube (28).

6. Dispositif de montage selon l'une quelconque des revendications précédentes, **caractérisé en ce que** les moyens amovibles de liaison (66, 70) en rotation du corps de cassette (38) et du corps cylindrique (22) comprennent un Vé de guidage (70) côté moyeu et un adaptateur (66) côté cassette ou inversement.

7. Dispositif de montage selon la revendication 6, **caractérisé en ce que** l'adaptateur (66) est de forme triangulaire.

8. Dispositif selon l'une quelconque des revendications précédentes, **caractérisé en ce que** les moyens de liaison (72) comprennent en outre des moyens de rappel élastique (92,96).

9. Dispositif selon l'une quelconque des revendications précédentes, **caractérisé en ce qu'**il comprend en outre des moyens de retenue à frottement doux cranté des moyens de manoeuvre (75) par rapport au premier tube (28).

## Patentansprüche

1. Radnabenanpassvorrichtung, insbesondere für ein Hinterrad von Zweirädem, auf einem Rahmen, insbesondere für ein Fahrrad, welches wenigstens ein Antriebskettenrad (42) des Hinterrads aufweist, welches auf einem Kassettenkörper (38) und einer Nabe (10) mit einem zylindrischen Körper (22) montiert ist, der seitliche Flansche (24) aufweist, die geeignet sind, Speichen (12) aufzunehmen, mit:
einer ersten Hülse (28), die frei drehbar in der Nabe gelagert ist und mit Befestigungseinrichtungen am Rahmen versehen ist,
einer zweiten Hülse (46), die frei drehbar im Kassettenkörper (38) montiert ist und mit Befestigungseinrichtungen (52) am Rahmen versehen ist,
Verbindungseinrichtungen (72) dieser zwei Hülsen,
Bewegungseinrichtungen (75) dieser Verbindungseinrichtungen mit Sperreinrichtungen (20) dieser Bewegungseinrichtungen und entfembaren Verbindungsmitteln (66, 70), drehbar bezüglich des Kassettenkörpers und des zylindrischen Körpers der Nabe,
**dadurch gekennzeichnet, dass** die Verbindungseinrichtungen (72) eine Verbindungshülse (74) aufweisen, die gestaltet ist, um in der ersten und zweiten Hülse zwischen wenigstens einer ersten Position, in welcher die Verbindungshülse in der ersten Hülse zurückgezogen ist und einer zweiten Position, in der die Verbindungshülse aus der ersten Hülse hervorsteht und in die zweite Hülse eintritt, wenn die erste und zweite Hülse in eine Linie gebracht sind, zu gleiten.

2. Vorrichtung gemäß Anspruch 1 mit einem Freilaufmechanismus (16), der zwischen der ersten Hülse (28) und dem zylindrischen Körper (22) der Nabe oder zwischen die zweite Hülse (46) und den Kassettenkörper (38) eingeschoben ist.

3. Anpassvorrichtung gemäß Anspruch 1 oder 2, wobei die Verbindungshülse (74) einen geschlossenen Schlitz (76) aufweist, der gestaltet ist, um einen Stift (90) aufzunehmen, der fest mit der Bewegungseinrichtung (75) verbunden ist.

4. Anpassvorrichtung gemäß Anspruch 1 oder 2, wobei die Verbindungshülse (74) wenigstens eine geradlinige Öffnung (506) mit einem Seitenabschnitt (508) aufweist, welche zum Zusammenwirken mit wenigstens einem Stift (500, 600) vorgesehen ist, der fest mit der zweiten Hülse (46) verbunden ist.

5. Anpassvorrichtung gemäß einem der vorangegangenen Ansprüche, wobei die Bewegungseinrichtung eine zentrale Bewegungswelle (75) aufweist, die fest mit der Sperreinrichtung verbunden und verschiebbar beweglich und drehbar bezüglich der ersten Hülse (28) ist.

6. Anpassvorrichtung gemäß einem der vorangegangenen Ansprüche, wobei die entfembaren Verbindungseinrichtungen, die drehbar bezüglich des Kassettenkörpers und des zylindrischen Körpers sind, einen Führungsabschnitt (70) auf der Seite der Nabe und einen Adapter (66) auf der Seite der Kassette oder umgekehrt aufweisen.

7. Anpassvorrichtung gemäß Anspruch 6, wobei das Adapter (66) dreieckig ist.

8. Anpassvorrichtung gemäß einem der vorangegangenen Ansprüche, wobei die Verbindungseinrichtungen ferner elastische Rückstelleinrichtungen (92, 96) aufweisen.

9. Anpassvorrichtung gemäß einem der vorangegangenen Ansprüche, die femer Rückhalteeinrichtungen aufweist, mit einer gekerbten kraftschlüssigen Passung der Bewegungseinrichtung, mit Bezug auf die erste Hülse (28).

## Claims

1. Wheel hub fitting device, in particular for a rear wheel of two-wheelers, on a frame, in particular for a bicycle, comprising at least one driving sprocket (42) of the rear wheel mounted on a cassette body (38) and a hub (10) with a cylindrical body (22) provided with lateral flanges (24) adapted to receive spokes (12) comprising:
a first tube (28) mounted freely rotatable inside the hub and provided with fixing means on the frame,
a second tube (46) mounted freely rotatable inside the cassette body (38) and provided with fixing means (52) of the frame,
connection means (72) of these two tubes,
maneuver means (75) of these connection means with locking means (20) of these maneuver means, and removable connection means (66, 70) rotatable with respect to the cassette body and to the cylindrical body of the hub
**characterized in that** the connection means (72) comprise a connection tube (74) designed to slide in the first and second tube between at least a first position in which the connection tube is retracted inside the first tube and a second position in which the connection tube is projecting outside the first tube and enters the second tube when the first and second tube are aligned.

2. Device according to claim 1, wherein it comprises a free wheel mechanism (16) interposed between the first tube (28) and the cylindrical body (22) of the hub or between the second tube (46) and the cassette body (38).

3. Fitting device according to claim 1 or 2, wherein the connection tube (74) comprises a closed slot (76) designed to receive a pin (90) fixedly connected with the maneuver means (75).

4. Fitting device according to claim 1 or 2, wherein the connection tube (74) comprises at least one rectilinear opening (506) with a side portion (508), provided to cooperate with at least one pin (500, 600) fixedly connected to the second tube (46).

5. Fitting device according to any one of the preceding claims, wherein the maneuver means comprise a central maneuver shaft (75) fixedly connected with the locking means and translationally movable and rotatable relative to the first tube (28).

6. Fitting device according to any one of the preceding claims, wherein the removable connection means rotatable with respect to the cassette body and the cylindrical body comprise a guide portion (70) on the side of the hub and an adapter (66) on the side of the cassette or conversely.

7. Fitting device according to claim 6, wherein the adapter (66) is triangular.

8. Fitting device according to any one of the preceding claims, wherein the connection means further comprise resilient return means (92, 96).

9. Fitting device according to any one of the preceding claims, further comprising retention means with a notched frictional fit of the maneuver means with respect to the first tube (28).
